# EUROPEAN PATENT APPLICATION

(11) **EP 1 548 423 A1**
(43) Date of publication of application: **29.06.2005**
(21) Application number: 03794132.5
(22) Date of filing: 29.08.2003
(51) Int. Cl.: G01N 21/64

(54) **IMAGE PROCESSING METHOD FOR BIOCHEMICAL TEST**

(30) Priority: 09.09.2002 JP 2002263034
(71) Applicant: Olympus Corporation, Tokyo 151-0072 (JP)
(72) Inventor: OKAWA, Kaneyasu, Tsukuimachi, Tsukui-gun, Kanagawa 220-02 (JP); SATO, Takatomo, Hino-shi, Tokyo 191-0041 (JP)
(74) Representative: von Hellfeld, Axel, Dr. Dipl.-Phys.,
(86) International application number: PCT/JP2003/011019
(87) International publication number: WO 2004/023117

(57) **Abstract**

An image processing method for a biochemical test of the present invention shoots a light image as a sample image by applying excitation illumination to an array for the biochemical test, extracts, as a reference image, a background image obtained by excluding an image of a micro pattern indicating fluorescence light generated from each probe array element from the sample image, and corrects the sample image by use of the reference image.

## Description

### Technical Field

The present invention relates to an image processing method for a biochemical test to inspect a state of a biochemical reaction.

### Background Art

In recent years, several methods of arrayed hybridization reaction have been developed for "sequencing by hybridization" (SBH). Examples of the methods include SBH using a method of stepwise hybridization of different oligonucleotide probes arranged in a grid shape on a film, and an array of DNA samples.

Moreover, the term "genosensor" has heretofore referred to a system to bond an oligonucleotide which is a recognizable element of a sequence complementary to a target nucleic acid sequence to the surface of a two-dimensional array. Furthermore, a concept of the genosensor includes a fine processing device which is capable of quickly detecting the hybridization and in which a fine electronic component exists in each test portion.

In recent years, the following inventive flow-through genosensor has been provided with respect to this two-dimensional array. In this case, the nucleic acid recognizable elements are immobilized in holes or channels arranged in spot shapes and densely charged over a wafer of a solid support material. A known fine processing technique is usable in manufacturing glass and porous silicon of a micro-channel or nano-channel which is useful as the support wafer. This flow-through genosensor utilizes various known detection methods including finely processed optical and electronic detection components, films, charged bonding element array, camera system, and phosphorescence storage technique. In this flow-through apparatus, the following advantage is obtained as compared with a known flat surface design.
(1) Since a surface area enormously increases, detection sensitivity is improved.
(2) A time required for the hybridization reaction is shortened (time required for an average target molecule to encounter the probe bonded to the surface is reduced to several milliseconds from several hours), the hybridization is speeded up, and mispairing identification can be performed both in forward and backward reactions.
(3) Since a solution can be gradually passed through a porous wafer, a thin nucleic acid solution can be analyzed.
(4) Since quick drying of small droplets of a probe solution on the flat surface exposed to the atmosphere is avoided, chemical bonding of probe molecules with respect to the surface in each separated region is promoted.

This flow-through apparatus having the above-described advantages will be hereinafter referred to as a three-dimensional array. As a conventional technique concerning the three-dimensional array, Jpn. Pat. Appln. KOHYO Publication No. 9-504864 is cited, and a configuration and function will be described briefly with reference to FIG. 12.

FIG. 12 is a diagram showing a tapered sample well array configuring the three-dimensional array. In FIG. 12, a plurality of tapered holes 102 are arranged in a porous glass wafer 101, and tapered wells 103 are buried in these holes 102. The tapered well 103 includes a channel 104 configuring a bonded region of a biomolecule immobilized in the well and having a diameter of 0.1 to 10 µm in a bottom part thereof. Each channel 104 has many micro through-holes 105 as shown. Detection is performed in the following steps using this well array.
(1) A solution containing 4 ml of 3-glycidoxypropyl-trimethoxysilane, 12 ml of xylene, and 0.5 ml of N, N-diisopropylethyl amine (Hunig base) is flown into wafer holes, and then the wafer is immersed in the solution at 80°C for five hours, then flushed with tetrahydrofuran, and dried at 80°C, so that the wafer is formed into epoxysilane-derivatized glass.
(2) A plurality of oligonucleotide probes containing 5'-or 3'-alkylamine (introduced during chemical synthesis) are dissolved in water at a ratio of 10 µM to 50 µM, and micro amounts of the probes are dispensed into a porous glass wafer 101 (silica wafer). After allowing reaction at 65°C overnight, the surface is simply flushed with water at 65°C, then 10 mM triethylamine, and an unreacted epoxy group on the surface is removed. Subsequently, the surface is again flushed with water at 65°C, and air-dried, and accordingly, amine-derivatized oligonucleotide is bonded to epoxysilane-derivatized glass.
(3) An amplified product is 5'-labelled by a polymerase chain reaction for taking [³²P] nucleotide into a product during amplification, or using gamma-³²P [ATP]+polynucleotide/kinase, and accordingly, target DNA (analysis matter) is prepared. The label that has not been taken in is removed by Centricon filtering. Preferably, if one PCR piece is 5'-biotin labeled, one chain can be prepared by streptoavidin/affinity-chromatography. The target DNA is dissolved in a hybridization buffer solution (50 mM tris-HCl, pH8, 2m MEDTA, 3.3M tetramethylammonium chloride) having a concentration of at least 5 nM (5 fmol/µl) and having a specific activity of at least 5,000 cpm/fmol. The PCR piece having a several hundred base length is suitable for hybridization with oligonucleotide ligated onto the surface having at least an octamer length.
(4) A target DNA sample is poured into a porous region of a chip, and incubated at 6°C for five to 15 minutes, and the hybridization is performed. Next, the hybridization solution is passed through the porous chip at 18°C for an equal time to thereby clean the chip. In another method, the hybridization may be performed with a buffer solution containing 1MKCL, NaCl or 5.2M betaine instead of tetramethylammonium chloride.
(5) A hybridization strength is detected and quantified using a CCD genosensor device. A CCD genosensor device having a high resolution and high sensitivity is used, and prepared for chemical luminescent, fluorescent, or radiation labeling.

In a case where biochemical test has heretofore been performed using the three-dimensional array shown in FIG. 12, first an array for the biochemical test is prepared. Moreover, excitation illumination is applied to a standard reflective plate disposed under microscope observation, and a reference image is shot by a CCD camera. Next, the reflective plate is discharged, the array for the biochemical test is disposed in the same position, the solution of the sample to be inspected, labeled with a fluorescence molecule, is supplied, and a binding reaction is caused between each probe and a material in the sample solution. Subsequently, excitation illumination is applied to the array for the biochemical test, and a fluorescence image is shot by the CCD camera to form a sample image. The sample image is corrected with a reference image, and accordingly fluorescence generated from a large number of probe array elements 3, that is, micro patterns is detected.

However, the standard reflective plate has heretofore been disposed to obtain the reference image. Therefore, means for exclusive use is required, the device is enlarged, and further a treatment time up to correction of the sample image lengthens. When acquiring the reference image, noise is sometimes caused due to dust and the like on the standard reflective plate, thus detection precision of a signal indicating fluorescence luminance is influenced. There is also a problem that maintenance or the like of the standard reflective plate is laborious.

An object of the present invention is to provide an image processing method for a biochemical test, capable of precisely and quickly detecting a signal indicating an emission luminance of the micro pattern included in the sample image by a simple process.

### Disclosure of the Invention

(1) An image processing method for a biochemical test of the present invention is an image processing method for a biochemical test of supplying a solution of a biochemical material to an array for the biochemical test, on whose surface each biochemical material specifically reactive with the biochemical material is held, and detecting emission intensity of a luminescent molecule using a label by the luminescent molecule for each probe array element of the array for the biochemical test by an array type detection unit, whereby reaction states of the biochemical material and the biochemical material specifically reactive with the biochemical material are inspected for each of the probe array elements, the method comprising: shooting an image of the array for the biochemical test as a sample image; extracting, as a reference image, a background image obtained by excluding an image of a micro pattern indicating intensity of light generated from the probe array element from the sample image; and correcting the sample image by use of the reference image.
(2) The image processing method for the biochemical test of the present invention according to (1), further comprising: subjecting the image of the micro pattern to an eroding process and thereafter a dilating process to thereby extract the reference image.
(3) The image processing method for the biochemical test of the present invention according to (2), further comprising: executing the eroding and dilating processes using a kernel having a predetermined shape as many as times necessary to eliminate the micro pattern.
(4) The image processing method for the biochemical test of the present invention according to (3), wherein the eroding and dilating processes comprise: using a cross-shaped kernel of 3x3 pixels, and setting a pixel number corresponding to a maximum radius or more of a circumscribed circle of the micro pattern as the number of process times.
(5) The image processing method for the biochemical test of the present invention according to (3), wherein the eroding and dilating processes comprise: using a circular kernel of "a pixel number corresponding to a maximum diameter or more of a circumscribed circle of the micro pattern" × "a pixel number corresponding to the maximum diameter or more of the circumscribed circle" pixels, and setting the number of process times to 1.
(6) The image processing method for the biochemical test of the present invention according to any one of (1) to (5), further comprising: dividing a luminance value of each pixel of the sample image by that of each pixel of the corresponding reference image to thereby correct the sample image.
(7) The image processing method for the biochemical test of the present invention according to any one of (1) to (5), further comprising: subtracting a luminance value of each pixel of the corresponding reference image from that of each pixel of the sample image to thereby correct the sample image.
(8) The image processing method for the biochemical test of the present invention according to any one of (1) to (5), further comprising: calculating (a maximum luminance value of the reference image/a luminance value of the pixel) with respect to each pixel of the reference image, and multiplying a luminance value of each pixel of the corresponding sample image by the calculated value to thereby correct the sample image.
(9) The image processing method for the biochemical test of the present invention according to any one of (1) to (8), further comprising: subjecting the reference image to a smoothing process to thereby correct the sample image.
(10) The image processing method for the biochemical test of the present invention according to any one of (1) to (9), wherein the image of the micro pattern is a fluorescence image obtained by illuminating the array for the biochemical test having a large number of micro spots labeled with fluorescence with excitation light, and the sample image is corrected to thereby detect a signal indicating a fluorescence luminance of each micro spot.

### Brief Description of the Drawings

FIG. 1 is a diagram showing a configuration of a microscope device which performs an image processing method for a biochemical test according to an embodiment of the present invention;
FIG. 2A is a diagram showing a schematic configuration of an array for the biochemical test according to the embodiment of the present invention;
FIG. 2B is a diagram showing a schematic configuration of the array for the biochemical test according to the embodiment of the present invention;
FIG. 3 is a flowchart showing a test procedure according to the embodiment of the present invention;
FIG. 4 is a diagram showing an example of a sample image according to the embodiment of the present invention using iso-luminance lines;
FIG. 5 is a diagram showing a luminance distribution of the sample image according to the embodiment of the present invention;
FIG. 6A is a diagram showing a cross-shaped kernel according to the embodiment of the present invention;
FIG. 6B is a diagram showing a circular kernel according to the embodiment of the present invention;
FIG. 6C is a diagram showing a circular kernel according to the embodiment of the present invention;
FIG. 7 is an iso-luminance diagram of a reference image according to the embodiment of the present invention;
FIG. 8 is a diagram showing a luminance distribution of the reference image according to the embodiment of the present invention;
FIG. 9 is a diagram showing a corrected sample image according to the embodiment of the present invention;
FIG. 10 is a diagram showing the luminance distribution of the corrected sample image according to the embodiment of the present invention;
FIG. 11 is a diagram showing the luminance distribution of a smoothed reference image according to the embodiment of the present invention; and
FIG. 12 is a diagram showing a tapered sample well array configuring a three-dimensional array according to a conventional example.

### Best Mode for Carrying out the Invention

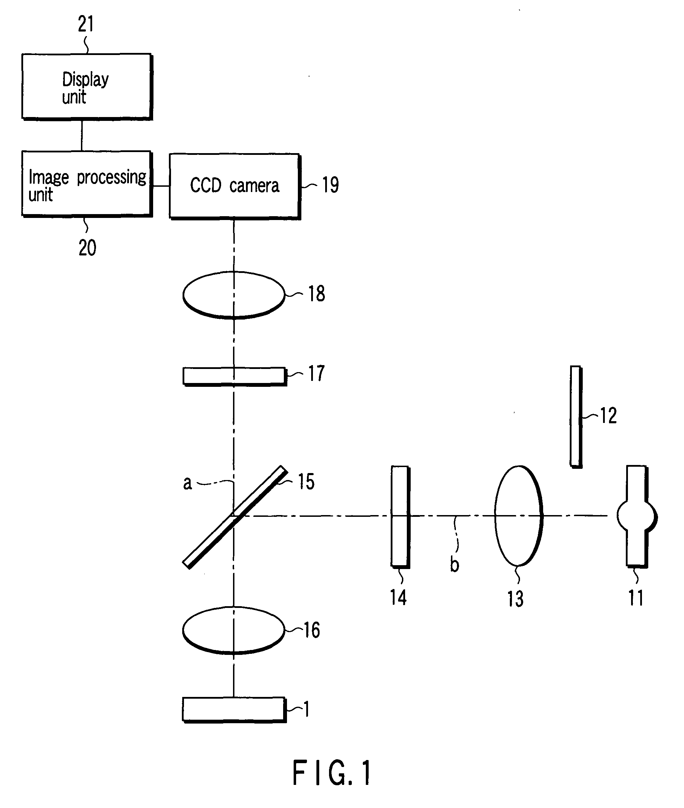

FIG. 1 is a diagram showing a configuration of a microscope device which performs an image processing method for a biochemical test according to an embodiment of the present invention. In FIG. 1, a mercury light source or the like is used in an excitation light source 11. A shutter 12, a lens 13, an excitation filter 14, and a dichroic mirror 15 are disposed on a light path of excitation light emitted from this light source 11, and an objective lens 16 and a biochemical test array 1 described later are disposed on a reflection light path of the dichroic mirror 15. A fluorescence filter 17, an image forming lens 18, and a CCD camera 19 are disposed on a transmitted light path of the dichroic mirror 15. The CCD camera 19 is connected to an image processing unit 20, and the image processing unit 20 is connected to a display unit 21.

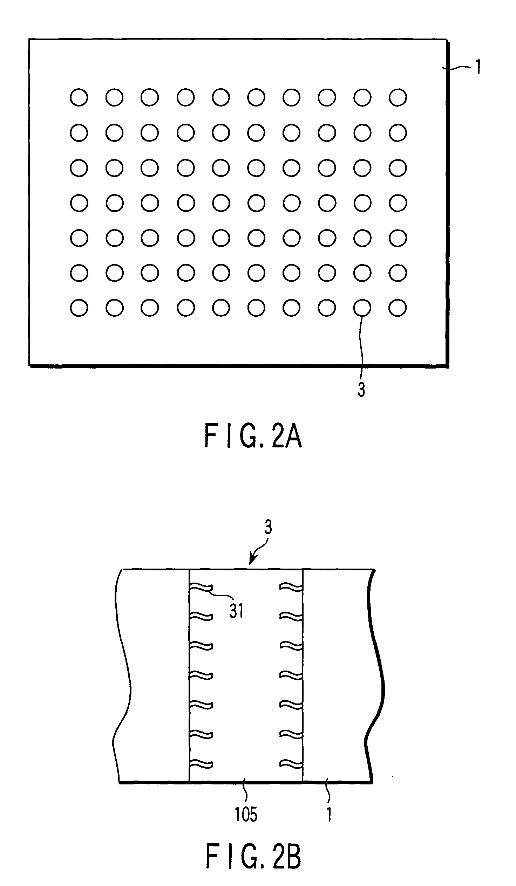

FIGS. 2A, 2B are diagrams showing a schematic configuration of the array for the biochemical test for use in the present embodiment, FIG. 2A is a diagram showing a format of an upper surface, and FIG. 2B is a partial side view. The biochemical test array 1 is constituted of a three-dimensional array shown in FIG. 12. As shown in FIG. 2A, probe array elements 3 (micro spots) are two-dimensionally arranged in the biochemical test array 1. These probe array elements 3 are constituted of tapered wells 103 as shown in FIG. 12, and have channels 104 having a diameter of 0.1 to 10 µm in a bottom part thereof, and further each channel 104 has many micro through-holes 105 as shown in FIG. 2B. Probes 31 are bonded to wall surfaces of the respective through-holes 105.

That is, in the biochemical test array 1, in order to secure a binding reaction of the probes, solutions of probes are preferably supplied to different tapered wells 103 in the surface of a porous glass wafer 101, and the probes included in the solutions may be held by the respective through-holes 105 of each channel 104 disposed in the porous glass wafer 101. However, without disposing the porous glass wafer 101, micro amounts of the solutions of the probes may be dispensed and held directly in the respective through-holes 105. A member including the through-holes 105 may be configured as a reaction carrier having a solid structure constituted of a porous or fibrous material or a formed material.

An outline of the biochemical test in the present embodiment will be described hereinafter.

First, an inspector disposes the biochemical test array 1 under microscope observation. The probes which differ with every probe array element are solidified beforehand in the probe array elements 3 in this biochemical test array 1.

Next, the inspector supplies the solution of the sample to be inspected, labeled with florescence molecules, to the biochemical test array 1, causes the binding reaction of each probe with the material in the sample solution, and thereafter removes the non-bonded material from the probe array elements 3.

Next, excitation illumination is applied to the biochemical test array 1 (substrate), and the sample image is shot by the CCD camera 19. The sample images are shot according to the number of types of fluorescence materials for use in the labeling. In this sample image, on an image indicating a background which is proportional to excitation intensity, fluorescence micro patterns generated from a large number of probe array elements 3 which are similarly proportional to the excitation intensity are scattered, and noise is added to the image irrespective of the excitation intensity. It is to be noted that in order to prevent deterioration of the fluorescence material, immediately after the shooting, the excitation illumination is preferably interrupted by the shutter 12 and the like.

Next, the image processing unit 20 extracts background images excluding the micro patterns from the sample images, and obtains reference images. Moreover, the image processing unit 20 corrects each corresponding sample image with each reference image. Accordingly, a signal of the micro pattern included in the sample image is correctly detected.

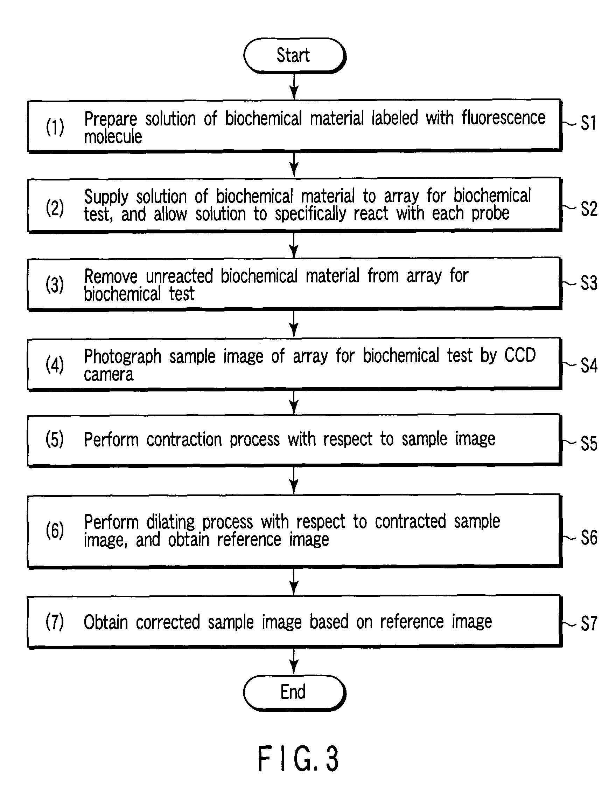

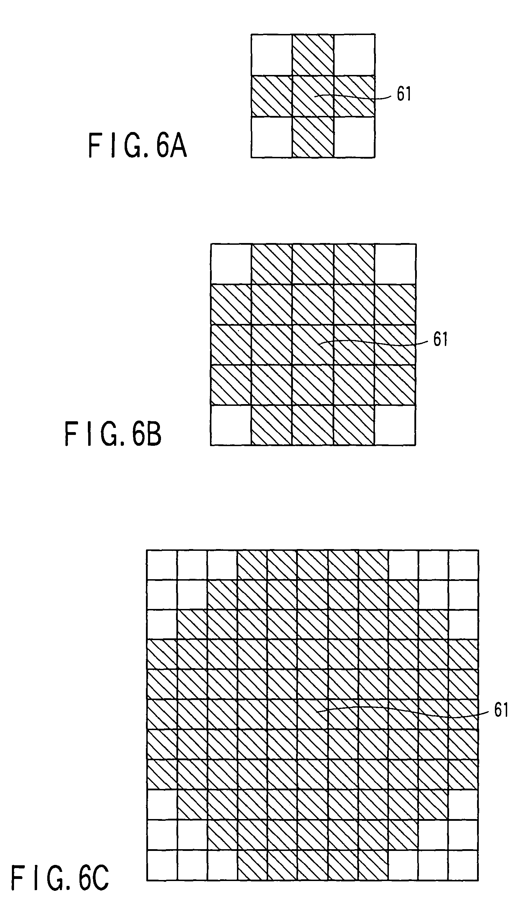

FIG. 3 is a flowchart showing a test procedure according to the present embodiment. A test method and function will be described hereinafter with reference to FIG. 3.
(1) Step S1: First, an inspector prepares a solution of a biochemical material labeled with a fluorescence molecule such as FITC.
(2) Step S2: The inspector supplies the solution of the biochemical material to the biochemical test array 1, and allows the solution to specifically react with each probe. In this case, the inspector disposes the biochemical test array 1 shown in FIG. 2A on the sample surface under the observation of the fluorescence microscope shown in FIG. 1. The solution of the biochemical material is uniformly supplied to the surface. Accordingly, a specific binding reaction is caused between the probe in the probe array element 3 on the biochemical test array 1 and the biochemical material included in the solution. As a result, the fluorescence molecules having a quantity corresponding to intensity of the reaction in each probe array element 3 are indirectly bonded to the probes.
(3) Step S3: The inspector removes an unreacted biochemical material from the biochemical test array 1. In this case, after the above-described binding reaction, the inspector removes the non-bonded biochemical material from each probe array element 3 of the biochemical test array 1. In general, a method of cleaning using a cleaning solution is adopted. However, in a case where the reaction carrier has a solid structure, the carrier may be removed together with the solution by a pump or the like without using the cleaning solution. Additionally, needless to say, they are more surely removed using the cleaning solution.
(4) Step S4: The inspector shoots an image of the biochemical test array 1 as a sample image by the CCD camera 19. In this case, the biochemical test array 1 is excited/illuminated with the excitation light source 11 to thereby shoot a fluorescence image.
   The excitation light from the excitation light source 11 is reflected by the dichroic mirror 15 via the lens 13 and excitation filter 14, and applied to the whole upper surface of the biochemical test array 1 via the objective lens 16. Together with the fluorescence generated from the fluorescence molecule bonded to the sample material in the probe array element 3 of the biochemical test array 1, reflected light in the biochemical test array 1 forming the background, self fluorescence of the biochemical test array 1, stray light mixed from the outside and the like enter the CCD camera 19 via the objective lens 16, dichroic mirror 15, band pass filter 17, and image forming lens 18, and the sample image is shot. The sample image shot by the CCD camera 19 is sent to the image processing unit 20.
   It is to be noted that in the present embodiment, a CCD is used as a light receiving element, but this is not limitative, and another area sensor may be used. Therefore, the "area sensor" may be used instead of the "CCD" described below.

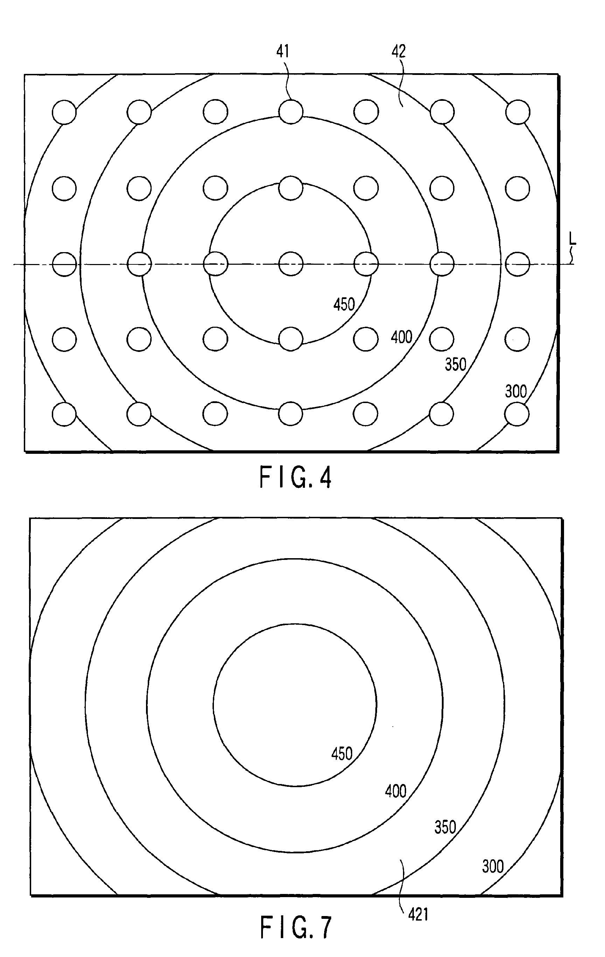

   FIG. 4 is a diagram showing an example of the sample image using iso-luminance lines. In FIG. 4, reference numeral 41 denotes iso-luminance lines of two-dimensionally arranged micro patterns, 42 denotes iso-luminance lines of the background, and numerals in the vicinity of the iso-luminance lines 42 of the background indicate the luminance of each iso-luminance line of the background.

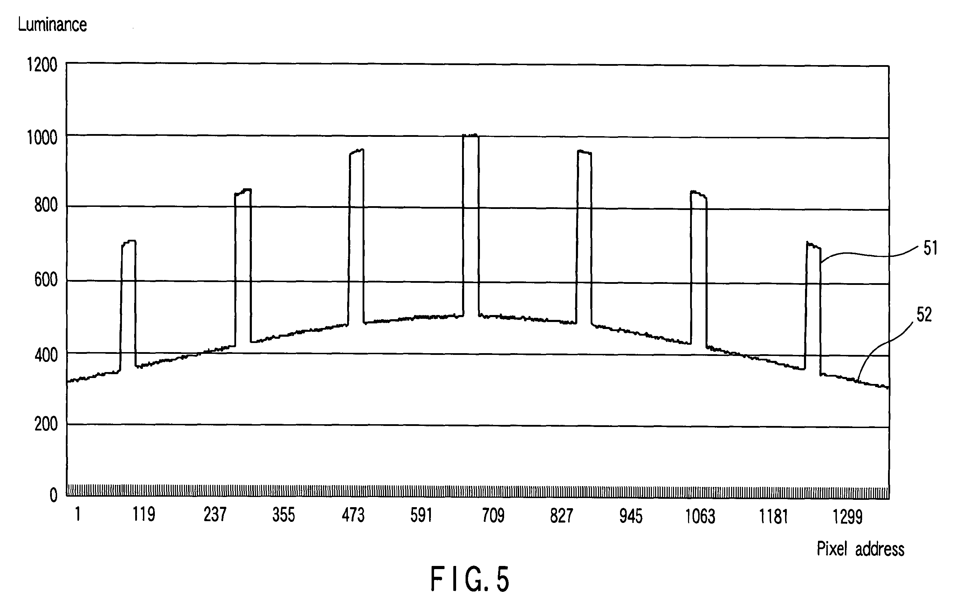

   FIG. 5 is a diagram showing a luminance distribution of the sample image, the horizontal axis indicates a pixel address, the vertical axis indicates the luminance (gradation), and the luminance distribution of a predetermined pixel line L on the sample image shown in FIG. 4 is represented. Now, assuming that the background has a uniform luminance value 500, and all luminance of a signal indicating the micro pattern is 500, as to the formed sample image, an amount of the signal protruding from the uniform luminance value 500 of the background is all 500. However, in a case where a maximum luminance value is 500 in the vicinity of a middle pixel, and the background is formed by uneven excitation illumination, as shown in FIG. 5, the sample image has a distribution in which signals 51 proportional to the luminance distribution of the background protrudent on a signal 52 indicating the background including excitation illumination unevenness.
(5) Step S5: The image processing unit 20 performs an eroding process with respect to each sample image. At this time, for example, a cross-shaped kernel constituted of 3×3 pixels shown in FIG. 6A is applied. The image processing unit 20 performs a process to apply a central pixel 61 of the cross-shaped kernel shown in FIG. 6A to each pixel of the sample image, and replace the luminance of the central pixel 61 with a minimum luminance of five pixels (the central pixel 61 itself and four upper/ lower/right/left pixels) shown by slant line portions, that is, an eroding process.
   When this eroding process is performed once with respect to all pixels of the sample image, the image is eroded by one peripheral pixel. When the eroding processes are executed as many as pixels (e.g., 13 pixels) corresponding to a maximum radius of a circumscribed circle of the micro pattern 41 or more, all the micro patterns disappear, and the sample image is modulated only by the background.
   It is to be noted that in this eroding process, in addition to the cross-shaped kernel constituted of 3×3 pixels, a circular kernel may be applied. For example, the circular kernel constituted of 5x5 pixels shown in FIG. 6B may be used.
(6) Step S6: The image processing unit 20 performs a dilating process with respect to each sample image eroded in the step S5. Also at this time, for example, the cross-shaped kernel constituted of 3×3 pixels shown in FIG. 6A is applied. The image processing unit 20 performs a process to apply the central pixel 61 of the cross-shaped kernel shown in FIG. 6A to each pixel of the eroded sample image, and replace the luminance of the central pixel 61 with a maximum luminance of five pixels shown by slash line portions, that is, a dilating process.
   When this dilating process is performed once with respect to all the pixels of the eroded sample image, the image dilates by one peripheral pixel. When the dilating processes are executed as many times as pixels (e.g., 13 pixels) corresponding to the maximum radius of the circumscribed circle of the micro pattern 41 or more, as to the sample image, the modulated background image is demodulated in a state in which all the micro patterns of the signals disappear. This image is obtained as a reference image. In this dilating process, in addition to the cross-shaped kernel constituted of 3×3 pixels, the circular kernel may be applied. For example, the circular kernel constituted of 5×5 pixels shown in FIG. 6B may be used.

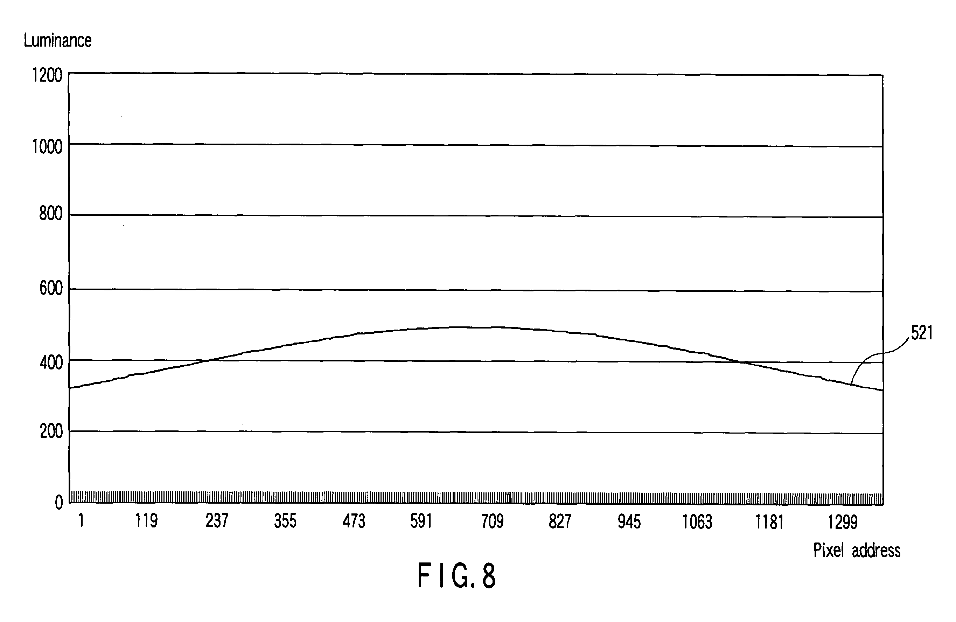

   FIG. 7 is an iso-luminance diagram of the reference image obtained in the steps S5 and S6, and numerals in the vicinity of iso-luminance lines indicate luminance of each iso-luminance line. In FIG. 7, the micro patterns 41 disappear from the sample image shown in FIG. 4, and a background 421 only is shown.
   FIG. 8 is a diagram showing a luminance distribution of the reference image, the horizontal axis indicates a pixel address, and the vertical axis indicates a luminance (gradation). FIG. 8 shows the luminance distribution after the eroding and dilating processes are executed with respect to the sample image. In FIG. 8, seven signals 51 protruding from the signal 52 indicating the background and indicating the micro patterns in FIG. 5 disappear, and an only signal 521 indicating the background is shown.
(7) Step S7: The image processing unit 20 detects the maximum luminance from the luminance distribution of the reference image shown in FIG. 8. Moreover, the image processing unit 20 calculates (maximum luminance of reference image/luminance of pixel) with respect to each pixel of the reference image, and multiplies the sample image by the calculated value to obtain a corrected sample image.

In other words, the image processing unit 20 divides the sample image by the reference image, and multiplies this calculated value by the maximum luminance of the reference image, which indicates a constant value, to obtain the corrected sample image. Here, the maximum luminance of the reference image, which indicates the constant value, is to adapt a luminance level to the sample image before the correction. Even if the level is not limited to the maximum luminance of the reference image, an effect described later is not impaired. That is, 1 may be adopted instead of the maximum luminance of the reference image. In this case, the image processing unit 20 divides the luminance value of each pixel of the sample image by that of each pixel of the corresponding reference image to thereby obtain the corrected sample image.

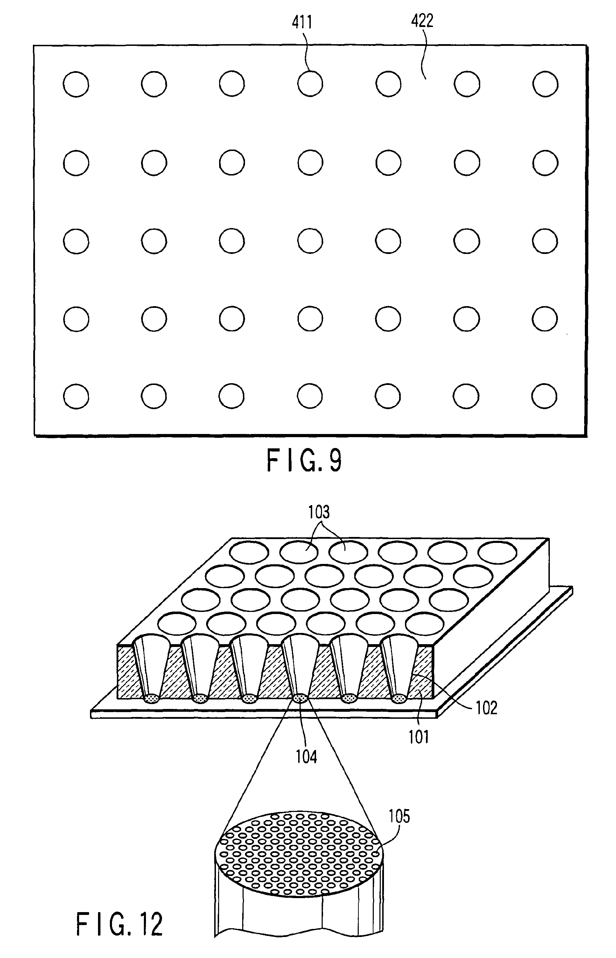

FIG. 9 is a diagram showing the corrected sample image obtained by multiplying the sample image by the "maximum luminance of reference image/luminance of pixel". In FIG. 9, micro patterns 411 are shown, and a background 422 is represented by a luminance distribution having a certain intensity of 500.

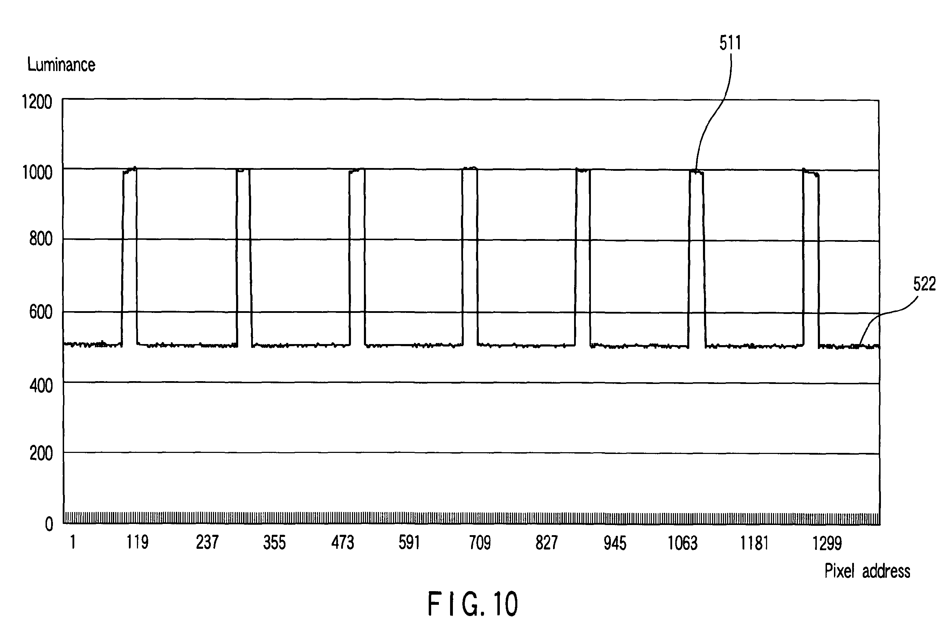

FIG. 10 is a diagram showing the luminance distribution of the corrected sample image, the horizontal axis indicates a pixel address, and the vertical axis indicates a luminance (gradation). FIG. 10 shows a luminance distribution after the correction is performed with respect to the sample image. In FIG. 10, as to a signal 522 indicating the background, the luminance value is substantially constant (about 500). With regard to seven signals 511 protruding from the signal 522 indicating the background, and indicating micro patterns, the maximum luminance value indicates a substantially constant value 1000, that is, a protruding amount is 500. The protruding amounts of the respective seven signals 511 indicating the micro patterns indicate a substantially constant value of 500, are not influenced by the background, and indicate correct luminance values. Therefore, when the protruding amounts are obtained as signal luminance values after the correction, correct luminance values are obtained.

It is to be noted that the image processing unit 20 can perform a smoothing process (low pass filter process) with respect to the reference image obtained by the step S6. At this time, for example, a circular kernel constituted of 11×11 pixels shown in FIG. 6C is applied. The image processing unit 20 performs a process to apply a central pixel of the circular kernel constituted of 11×11 pixels to each pixel of the reference image, and replace the luminance of the central pixel with an average luminance of 97 pixels in the circular kernel, that is, a smoothing process. When the maximum radius of the circumscribed circle of the micro pattern 41 is, for example, 13 pixels, the smoothing process is executed, for example, ten times with respect to all the pixels of the reference image.

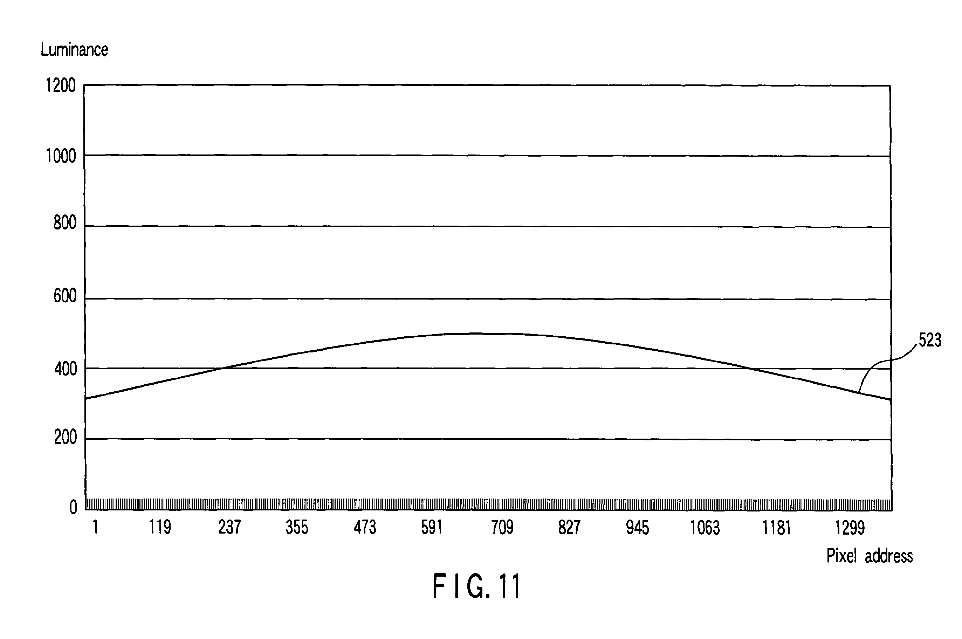

FIG. 11 is a diagram showing the luminance distribution of a smoothed reference image, the horizontal axis indicates a pixel address, and the vertical axis indicate a luminance (gradation). In FIG. 11, steps of the luminance value shown in the signal 521 indicating the background in FIG. 8 disappear, and a smooth signal 523 is shown.

The corrected sample image is obtained based on the reference image smoothed as described above in the above-described step S7. In the luminance distribution of the corrected sample image, peaks of seven signals 511 indicating the micro patterns in FIG. 10 are flattened. When the reference image is subjected to the smoothing process in this manner, each signal indicating the micro pattern on the corrected sample image indicates a more correct luminance value.

Moreover, in the above-described steps S5, S6, the image processing unit 20 can execute the eroding and dilating processes using the kernel whose shape is not limited to 3×3 pixels, 5×5 pixels or the like and is optional. For example, the eroding and dilating processes may be executed once using a circular kernel of "maximum diameter (e.g., 26 pixels) of circumscribed circle of micro pattern 41" × "the number of the pixels corresponding to a maximum diameter or more of the circumscribed circle", for example, a circular kernel constituted of 27×27 pixels. When the eroding and dilating processes necessary for eliminating the micro patterns are executed using the kernel having a predetermined shape in this manner, the reference image can be obtained.

When the background is formed by uneven excitation illumination as described above, a division process is effective. On the other hand, conversely, when the background is formed by noise other than the excitation illumination, such as dark current noise or stray light noise, a subtraction process is effective. That is, the image processing unit 20 subtracts the luminance value of each pixel of the corresponding reference image from that of each pixel of the sample image to thereby obtain a corrected sample image. Accordingly, unnecessary direct-current noise such as dark current noise or stray light noise included in a background image can be removed.

According to the present embodiment, the only background image is extracted as the reference image from the sample image in which the micro patterns are scattered in the background, and the sample image is corrected by the reference image, so that the signal indicating the fluorescence luminance of the micro pattern included in the sample image can be correctly detected. That is, when the image processing of the present embodiment is executed, the specific binding reaction caused between the probe in the probe array element 3 on the biochemical test array 1 and the biochemical material included in the solution can be correctly inspected for each probe array element 3.

The present invention is not limited to the above-described embodiment only, and can be appropriately modified and embodied in a range which does not change the scope. For example, for the sake of description, the number of micro patterns is 35, the luminance value of the signal is all set to be equal at 500, and the maximum luminance value of the background is 500, but these numeric values may indicate any value. The luminance value may differ with each signal.

According to the present invention, the following functions are produced.
(1) According to the image processing method for the biochemical test of the present invention, the signal indicating the emission luminance of the micro pattern included in the sample image can be correctly detected.
(2) According to the image processing method for the biochemical test of the present invention, the reference image in which the signal of the micro pattern disappears and the only signal of the background appears can be correctly extracted.
(3) According to the image processing method for the biochemical test of the present invention, the signal of the micro pattern can be surely eliminated.
(4) According to the image processing method for the biochemical test of the present invention, the signal of the micro pattern can be surely eliminated in a shorter time.
(5) According to the image processing method for the biochemical test of the present invention, the signal of the micro pattern can be surely eliminated in a shorter time.
(6) According to the image processing method for the biochemical test of the present invention, illumination unevenness can be corrected with respect to the sample image by a simple process by using the reference image.
(7) According to the image processing method for the biochemical test of the present invention, noise can be removed from the background image by the simple process by using the reference image.
(8) According to the image processing method for the biochemical test of the present invention, the sample image can be corrected by the simple process by using the reference image.
(9) According to the image processing method for the biochemical test of the present invention, the signal of the micro pattern can be more correctly detected.
(10) According to the image processing method for the biochemical test of the present invention, the specific binding reaction caused between the probe in the micro spot on the array for the biochemical test and the biochemical material included in the sample solution can be correctly inspected for each micro spot.

### Industrial Applicability

According to an image processing method for a biochemical test of the present invention, a signal indicating emission luminance of a micro pattern included in a sample image can be correctly and quickly detected by a simple process.

According to the present invention, a reference image does not have to be acquired by means for exclusive use using a standard reflective plate as in a conventional technique, and can be acquired by processing the shot sample image. Therefore, in the present invention, a time until the sample image is corrected is shortened, no noise is mixed when acquiring the reference image unlike a case where the means for exclusive use is used, and therefore precision of signal detection is enhanced.

## Claims

1. An image processing method for a biochemical test of supplying a solution of a biochemical material to an array for the biochemical test, on whose surface each biochemical material specifically reactive with the biochemical material is held, and detecting emission intensity of a luminescent molecule using a label by the luminescent molecule for each probe array element of the array for the biochemical test by an array type detection unit, whereby reaction states of the biochemical material and the biochemical material specifically reactive with the biochemical material are inspected for each of the probe array elements, the method **characterized by** comprising:
shooting an image of the array for the biochemical test as a sample image; extracting, as a reference image, a background image obtained by excluding an image of a micro pattern indicating intensity of light generated from the probe array element from the sample image; and correcting the sample image by use of the reference image.

2. The image processing method for the biochemical test according to claim 1, **characterized by** further comprising: subjecting the image of the micro pattern to an eroding process and thereafter a dilating process to thereby extract the reference image.

3. The image processing method for the biochemical test according to claim 2, **characterized by** further comprising: executing the eroding and dilating processes using a kernel having a predetermined shape as many as times necessary to eliminate the micro pattern.

4. The image processing method for the biochemical test according to claim 3, **characterized in that** the eroding and dilating processes comprise: using a cross-shaped kernel of 3×3 pixels, and setting a pixel number corresponding to a maximum radius or more of a circumscribed circle of the micro pattern as the number of process times.

5. The image processing method for the biochemical test according to claim 3, **characterized in that** the eroding and dilating processes comprise: using a circular kernel of "a pixel number corresponding to a maximum diameter or more of a circumscribed circle of the micro pattern" × "a pixel number corresponding to the maximum diameter or more of the circumscribed circle" pixels, and setting the number of process times to 1.

6. The image processing method for the biochemical test according to any one of claims 1 to 5, **characterized by** further comprising: dividing a luminance value of each pixel of the sample image by that of each pixel of the corresponding reference image to thereby correct the sample image.

7. The image processing method for the biochemical test according to any one of claims 1 to 5, **characterized by** further comprising: subtracting a luminance value of each pixel of the corresponding reference image from that of each pixel of the sample image to thereby correct the sample image.

8. The image processing method for the biochemical test according to any one of claims 1 to 5, **characterized by** further comprising: calculating (a maximum luminance value of the reference image/a luminance value of the pixel) with respect to each pixel of the reference image, and multiplying a luminance value of each pixel of the corresponding sample image by the calculated value to thereby correct the sample image.

9. The image processing method for the biochemical test according to any one of claims 1 to 8, **characterized by** further comprising: subjecting the reference image to a smoothing process to thereby correct the sample image.

10. The image processing method for the biochemical test according to any one of claims 1 to 9, **characterized in that** the image of the micro pattern is a fluorescence image obtained by illuminating the array for the biochemical test having a large number of micro spots labeled with fluorescence with excitation light, and the sample image is corrected to thereby detect a signal indicating a fluorescence luminance of each micro spot.
